(19) Europäisches Patentamt

European Patent Office

Office européen des brevets

(11) **EP 0 595 001 B1**

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(51) Int Cl.6: **H01B 7/08**, H01R 23/66
// B60R16/02

(21) Anmeldenummer: **93114713.6**

(22) Anmeldetag: **14.09.1993**

(54) **Kabelanordnung**

Cable arrangement

Arrangement de câble

(84) Benannte Vertragsstaaten:
**DE FR GB IT**

(30) Priorität: **30.10.1992 DE 4236735**
**20.07.1993 DE 4324239**

(43) Veröffentlichungstag der Anmeldung:
**04.05.1994 Patentblatt 1994/18**

(73) Patentinhaber: **Daimler-Benz Aktiengesellschaft**
**70546 Stuttgart (DE)**

(72) Erfinder:
• **Dorner, Jürgen**
**D-73240 Wendlingen (DE)**
• **Kühner, Thilo**
**D-71686 Remseck (DE)**

• **Grimmeisen, Sebastian**
**D-71332 Waiblingen (DE)**
• **Petry, Franz-Josef**
**D-71394 Kernen (DE)**
• **Häussler, Bernd**
**D-73760 Ostfildern (DE)**
• **Rall, Bernhard**
**D-89075 Ulm (DE)**

(74) Vertreter: **Weber, Gerhard, Dipl.-Phys. et al**
**AEG Aktiengesellschaft**
**60591 Frankurt (DE)**

(56) Entgegenhaltungen:
**DE-A- 3 336 195      US-A- 4 817 281**

## Beschreibung

Die Erfindung betrifft eine Verwendung einer Kabelanordnung zur entkoppelten Führung zweier getrennter Stromkreise.

In elektronischen Systemen, insbesondere auch in Kraftfahrzeugen, werden häufig Kabelverbindungen benötigt, die für getrennte Stromkreise zwei Leiterpaare, beispielsweise zwei Signalleitungen und zwei Versorgungsleitungen mit z.T. unterschiedlichen Querschnitten aufweisen. Zur entkoppelten Führung zweier Stromkreise sind die sogenannten Sternviererkabel bekannt, die aber ungünstig bezüglich der Handhabung sind.

Aus der DE-U- 1 9 86 570 ist eine Flachbandleitung mit fünf Adern bekannt, bei welcher drei Adern als Signalleitungen für RGB-Farbfernsehsignale jeweils durch eine Masseader voneinander getrennt sind. Die Masseadern reduzieren die kapazitive Verkopplung benachbarter Signalleitungen. Maßnahmen zur Reduzierung induktiver Verkopplungen sind nicht vorgesehen.

Flachbandkabel mit mehreren Leitern, auch Leitern unterschiedlichen Querschnitts, sind für ortsveränderliche Verbraucher z.B. in der DE-A- 33 36 195 beschrieben. Zur Vermeidung von Verwechslungen der Leiter kann der Kabelisolierkörper unsymmetrisch in Form einer einseitigen Längsrippe ausgeführt sein.

Aufgabe der vorliegenden Erfindung ist es, eine derartige Verwendung einer Kabelanordnung zur Führung zweier getrennter Stromkreise anzugeben, bei welcher sich die beiden Stromkreise möglichst wenig gegenseitig beeinflussen, und die günstig handzuhaben ist.

Die Erfindung ist im Patentanspruch 1 beschrieben. Die Unteransprüche enthalten vorteilhafte Ausführungen und Weiterbildungen der Erfindung.

Die Erfindung führt zu einer Anordnung, bei der die beiden Stromkreise sowohl induktiv als auch kapazitiv entkoppelt sind, wobei gegenüber einer herkömmlichen Anordnung das Flachbandkabel fünf Adern aufweist, die in bestimmter Weise für die beiden Stromkreise eingesetzt sind. Da die außen liegenden Teilleiter des aufgeteilten Leiters gegenüber dem zentralen Leiter nur den halben Leitungsquerschnitt aufzuweisen brauchen, kann eine durch die Leiter bewirkte Gewichtszunahme vermieden werden. Flachbandkabel weisen den praktischen Vorteil einfacher Handhabung auf. Sie können durch Schneidklemmverbindungen in einem Arbeitsgang abisoliert und mit Steckverbindern kontaktiert werden.

Die Erfindung verbindet einfache Handhabbarkeit mit hoher Entkopplung der Stromkreise. Sie ist nachfolgend anhand der Abbildungen noch eingehend veranschaulicht. Dabei zeigt

FIG.1     einen Querschnitt durch ein Flachbandkabel für eine Anordnung nach der Erfindung

FIG.2     eine Darstellung der kapazitiven Verhältnisse auf einer solchen Kabelanordnung

FIG.3     eine Darstellung der induktiven Koppelverhältnisse

FIG.4     ein Beispiel einer Anordnung mit zwei getrennten Stromkreisen.

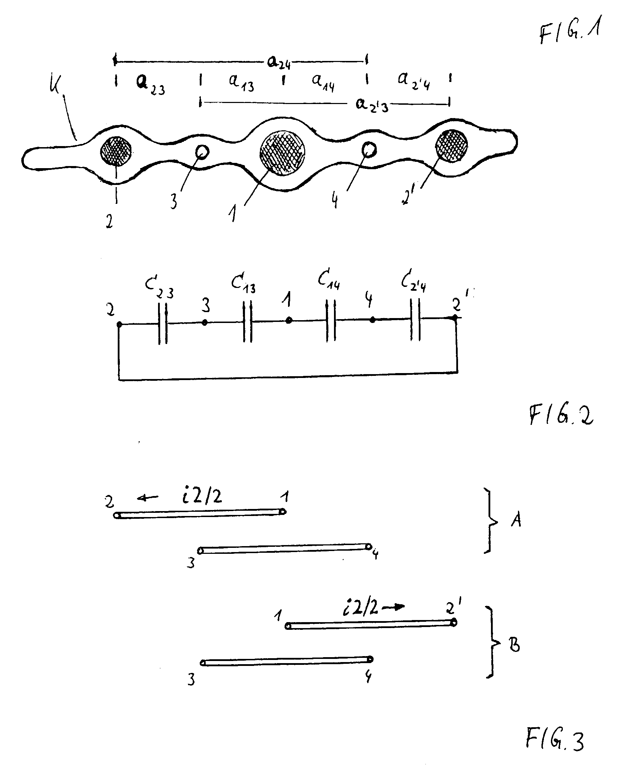

Das in FIG.1 im Querschnitt skizzierte Flachbandkabel weist fünf in einen Isolierkörper K eingebettete Leiter 1, 2, 2', 3 und 4 auf, die auch jeweils aus einer Mehrzahl von Litzendrähten bestehen können und in gegenseitigen Abständen $a_{mn}$ der Kabelebene angeordnet sind. Die Leiter bilden zwei Leiterpaare für zwei getrennte Stromkreise in der Weise, daß die Leiter 3 und 4 Hin- und Rückleiter eines ersten Leiterpaars bilden und das zweite Leiterpaar aus dem Leiter 1 und den Teilleitern 2 und 2', die zusammen den zweiten Leiter dieses Leiterpaars bilden, besteht. Die Leiterquerschnitte können verschieden und dem Einsatzfall angepaßt sein. Beispielsweise kann das Leiterpaar 3 und 4 als Signalleitung und das Leiterpaar 1 und 2, 2' als Stromversorgungsleitung vorgesehen sein. Die Teilleiter 2, 2' sind zumindest an den Enden der Leiter, vorzugsweise in an den Kabelenden angebrachten Steckverbindern miteinander verbunden und in den Steckverbindern an einen gemeinsamen Kontakt angeschlossen. Der Isolierkörper K des Kabels ist vorteilhafterweise unsymmetrisch ausgeführt vorzugsweise an den Außenenden, um auf einfache Weise eine eindeutige Zuordnung der Signalleiter sicherzustellen und eine Polaritätsvertauschung zwischen den Leitern 3 und 4 zu Vermeiden. Eine unsymmetrische Ausführung des Isolierkörpers eines Flachbandkabels ist beispielsweise aus der DE 33 36 195 C2 bekannt. Die in FIG.2 eingetragenen Kapazitäten zwischen benachbarten Leitern bilden über die Verbindung der Teilleiter 2, 2' eine kapazitive Brücke, deren Abgleichbedingung für kapazitive Entkopplung

$$C_{13} : C_{23} = C_{14} : C_{2'4}$$

wegen der Symmetrie der Anordnung mit $C_{13} = C_{14}$ und $C_{23} = C_{2'4}$ erfüllt ist. Die beiden Stromkreise sind somit kapazitiv entkoppelt.

Zur Beurteilung der induktiven Verkopplungssituation wird die Anordnung als aus zwei Vierleiteranordnungen A und B wie in FIG.3 skizziert zusammengesetzt betrachtet, wobei die Teilleiter 2, 2' jeweils den gleichen Strom i2/2 führen. Zumindest für die bei der induktiven Verkopplung relevanten hochfrequenten Stromanteile kann diese Gleichaufteilung aufgrund des Skin-Effekts als ohne weitere Maßnahmen gegeben angesehen werden.

Die Gegeninduktivität MA der Vierleiteranordnung A mit den Stromschleifen 1, 2 und 3, 4 ergibt sich zu

$$MA = 2L \ln ((a_{14}\, a_{23}) / (a_{13}\, a_{24}))\ \text{nH/cm}$$

und die Gegeninduktivität MB der Vierleiteranordnung B mit den Stromschleifen 1, 2' und 3, 4 zu

$$MB = 2L \ln ((a_{14}\, a_{2'3}) / (a_{13}\, a_{2'4}))\ \text{nH/cm}$$

und die Gegeninduktivität M der Gesamtanordnung als Summe

$$M = MA + MB$$

wobei jeweils mit L die Kabellänge in cm bezeichnet ist. Während die Gegeninduktivitäten MA und MB für sich betrachtet nicht verschwinden, wird die Gegeninduktivität M der Gesamtanordnung wegen der Symmetrie der Anordnung mit $a_{13} = a_{14}$, $a_{23} = a_{2'4}$ und $a_{2'3} = a_{24}$ zu Null, so daß die beiden Stromkreise auch induktiv entkoppelt sind.

Für die erfindungsgemäße Flachbandkabelanordnung ergibt sich somit eine kapazitive und induktive Entkopplung, d.h. eine Neutralisierung der beiden Stromkreise wie sie von dem wesentlich umständlicher zu handhabenden Sternviererkabel bekannt ist.

Die Entkopplung ist auch noch gegeben, wenn der zweite Stromkreis erdunsymmetrisch in der Weise ausgeführt ist, daß die Summe i2 der gleich großen Ströme i2/2 auf den Teilleitern 2, 2' auf den Teilleitern 2, 2' nicht entgegengesetzt gleich ist dem Strom auf dem zentralen Leiter 1, beispielsweise durch unsymmetrische kapazitive Verkopplung mit dem Massepotential einer Fahrzeugkarosserie. Der erste Stromkreis mit Leitern 3, 4 ist aber erdsymmetrisch auch in den angeschlossenen Baugruppen.

Die Neutralitätsbedingungen gelten streng nur für eine Kabelverlegung in freier Luft. Benachbarte Leiter und Metallflächen können u.U. wieder zu einer schwachen Verkopplung führen, die aber im Regelfall ein zulässiges Ausmaß nicht überschreiten wird. Eine Verfälschung der Symmetrie durch externe Impedanzen in den angeschlossenen Baugruppen ist nicht berücksichtigt.

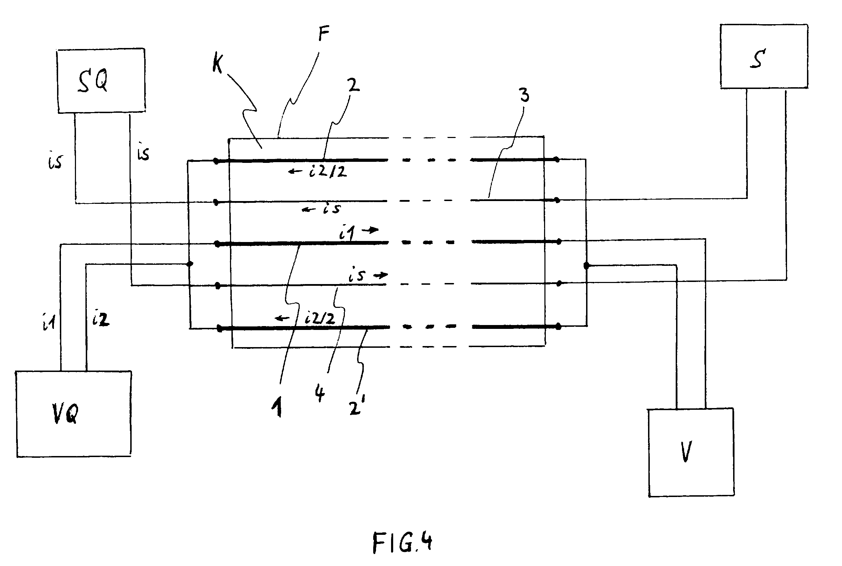

In FIG.4 ist eine Anordnung mit einer Versorgungsspannungsquelle VQ, einem Verbraucher V, einer Signalquelle SQ, einem Sensor S und einem Flachbandkabel F mit einem in FIG.1 skizzierten Aufbau gezeigt. Verbraucher und Sensor können auch Bestandteile ein und desselben Gerätes oder Bauteils sein. Versorgungsspannungsquelle VQ und Verbraucher V sind Stationen eines ersten geschlossenen Stromkreises, dessen Strom i1 über die Ader 1 als Hinleiter und in gleichmäßiger Aufteilung mit je i2/2 über die Adern 2, 2' als Rückleiter dieses ersten Stromkreises geführt ist. Die gleichmäßige Stromverteilung auf die Adern 2, 2' kann im Bedarfsfall durch zusätzliche, an sich bekannte Mittel wie Vorwiderstände, Drosseln etc. mit hoher Genauigkeit gewährleistet werden, die dann vorzugsweise in Steckverbindern integriert sind. Die Ströme i1 und i2 (=i2/2+i2/2) sind nicht notwendigerweise betragsgleich. Signalspannungsquelle SQ und Sensor S bilden mit den Adern 3 und 4 als Hin- und Rückleiter des Signalstroms is den zweiten, vom ersten Stromkreis getrennten Stromkreis. Durch die erfindungsgemäße Anordnung der Leiter der beiden Stromkreise sind diese auf der gesamten Länge des Flachbandkabels voneinander entkoppelt. Beide Stromkreise können beliebige Gleich- und/oder Wechselstromanteile führen.

**Patentansprüche**

1. Verwendung einer Kabelanordnung mit einem fünfadrigen Flachbandkabel, dessen Leiter bezüglich eines zentralen Leiters symmetrisch angeordnet sind, zur entkoppelten Führung von Stromkreisen in der Weise, daß

   - ein erster Stromkreis auf einem ersten Leiterpaar mit zwei Leitern (3, 4) geführt ist, die symmetrisch um den zentralen Leiter angeordnet sind,
   - ein zweiter Stromkreis auf einem zweiten Leiterpaar geführt ist, dessen erster Leiter der zentrale Leiter (1) ist und dessen zweiter Leiter in zwei Teilleiter (2, 2') aufgeteilt ist, die symmetrisch zu dem zentralen Leiter um die beiden (Leiter (3, 4) des ersten Leitungspaares angeordnet sind.

2. Verwendung nach Anspruch 1, dadurch gekennzeichnet, daß der Leitungsquerschnitt der beiden Teilleiter (2, 2') halb so groß ist wie der des zentralen Leiters (1).

3. Verwendung nach Anspruch 1 oder 2, dadurch gekennzeichnet, daß ein Isolierkörper (K) des Flachbandkabels unsymmetrisch an den Außenenden ausgeführt ist.

4. Verwendung nach einem der Ansprüche 1 bis 3, dadurch gekennzeichnet, daß die beiden Teilleiter (2, 2') in Steckverbindern an den Kabelenden galvanisch verbunden sind und einen gemeinsamen Steckkontakt besitzen.

**Claims**

1. Use of a cable arrangement with a five-core flat tape cable, the conductors of which are arranged symmetrically with respect to a central conductor, for decoupled conduction of current circuits in the manner that

- a first current circuit is conducted on a first conductor pair with two conductors (3, 4) which are arranged symmetrically about the central conductor,
- a second current circuit is conducted on a second conductor pair, the first conductor of which is the central conductor (1) and the second conductor of which is divided into two partial conductors (2, 2') which are arranged symmetrically to the central conductor about the two conductors (3, 4) of the first conductor pair.

2. Use according to claim 1, characterised thereby that the conduction cross-section of the two partial conductors (2, 2') is half as large as that of the central conductor (1).

3. Use according to claim 1 or 2, characterised thereby that an insulating body (K) of the flat tape cable is constructed asymmetrically at the outer ends.

4. Use according to one of claims 1 to 3, characterised thereby that the two partial conductors (2, 2') are electrically conductively connected into plug connectors at the cable ends and possess a common plug contact.

**Revendications**

1. Utilisation d'une configuration de câble avec un câble plat à cinq conducteurs disposés symétriquement par rapport à un conducteur central, pour établir à l'état découplé des liaisons de circuits électriques, de manière que

- les liaisons pour un premier circuit électrique soient établies par une première paire de conducteurs comprenant deux conducteurs (3, 4) disposés symétriquement de part et d'autre du conducteur central, et
- les liaisons pour un deuxième circuit électrique soient établies par un deuxième paire de conducteurs dont le premier est le conducteur central (1) et dont le second conducteur est partagé en deux conducteurs partiels (2, 2') disposés, symétriquement par rapport au conducteur central, de part et d'autre des deux conducteurs (3, 4) de la première paire.

2. Utilisation selon la revendication 1, caractérisée en ce que la section des deux conducteurs partiels (2, 2') correspond à la moitié de la section du conducteur central (1).

3. Utilisation selon la revendication 1 ou 2, caractérisée en ce qu'un corps isolant (K) du câble plat est d'exécution dissymétrique aux extrémités extérieures.

4. Utilisation selon une des revendications 1 à 3, caractérisée en ce que les deux conducteurs partiels (2, 2') sont reliés galvaniquement entre eux dans des connecteurs à enfichage prévus aux extrémités du câble, et possèdent un contact à enfichage commun.

FIG. 1

FIG. 2

FIG. 3

FIG.4

EP 0 595 001 B1